# EUROPEAN PATENT SPECIFICATION

(11) **EP 0 612 078 B1**
(45) Date of publication and mention of the grant of the patent: **22.07.1998**
(21) Application number: 94102202.2
(22) Date of filing: 12.02.1994
(51) Int. Cl.: G21C 15/25, F04F 5/50, F04F 5/46

(54) **High pressure steam injector**
Hochdruckdampfstrahlpumpe
Injecteur à vapeur à haute pression

(30) Priority: 19.02.1993 IT MI930324
(43) Date of publication of application: 24.08.1994
(73) Proprietor: CISE S.p.A., I-20090 Segrate (IT); ENEL S.p.A., I-00198 Roma (IT)
(72) Inventor: Mazzocchi, Luigi, c/o FERRAIOLO s.r.l., I-20124 Milano (IT); Galbiati, Luca, c/o FERRAIOLO s.r.l., I-20124 Milano (IT)
(74) Representative: Ferraiolo, Ruggero

(56) References cited:
- EP-A- 0 514 914
- WO-A-91/10832
- DE-A- 3 236 778
- US-A- 4 569 635
- THE FIRST JSME/ASME JOINT INTERNATIONAL CONFERENCE ON NUCLEAR ENGINEERING, vol.1, 4 November 1991, TOKYO pages 23 - 28 NARABAYASHI ET AL. 'Feasability and application on steam injector for next-generation reactor'

## Description

The present invention concerns a steam injection system for high pressures, in particular upto about 9 MPa, comprising especially an injector to achieve the injection of a liquid into a vessel containing a liquid under pressure as may be made necessary in emergency cases both in a "boiling water" type nuclear reactor, the operation pressure of which is close to 7 MPa, and in a secondary steam generator of a "pressurized water" type station in which the injection of water at pressures close to those specified above are required. The emergency cases mentioned are, for example, those caused by the breakage of the primary system of a boiling water reactor and subsequent loss of cooling fluid.

The prior art comprehends US-A-4,440,719 that discloses a system for the injection of emergency water into the vessel of a boiling water reactor that uses the very steam from the reactor. This system is essentially made up of two steam injectors in series; the water exiting the first injector is partly sent to a jet pump that pressurizes the water entering the same injector, after having been cooled in a heat exchanger. The remaining part of water is cooled in a different heat exchanger and enters a second injector. In this latter injector the water, the pressure of which has already been increased in the first injector, is further pressurized and finally injected into the reactor vessel.

A simplified version of said system is presented in the paper "The First JSME/ASME Joint International Conference on Nuclear Engineering - November 4th - 7th, 1991 - Vol. 1": a two stage injection system that does not use exchangers and jet pumps, as is in the said patent. This system comprised two steam injectors in series; the water exited the first stage at a pressure of about 2 MPa and then entered a second injector where its pressure was raised to reference pressures and higher. Two different types of injectors where used: while in the first stage an injector with steam injected centrally and water laterally, the second stage used an injector patented by C. Nicodemus of Helios Research Corporation with central water and lateral steam (US-A-4 569 635). In a further experiment said patented injector was replaced by an injector with water injected laterally, but with a double entry of steam (central and lateral, but more external than the water).

Also in this case the system, again comprising two injectors in series, gave good results.

A further simplification consisting in the use of a single injector (also in this case eliminating the exchanger system and jet pump) had been tried by General Electric in 1990.

Some tests at a reduced scale of an injector manufactured by Penberthy Corp. had provided encouraging results (maximum pressure obtained at the exit: 6 MPa, about 30% more than the steam at entry).

Another set of tests, conducted with a full-scale injector by Helios Research Corp., instead, did not produce such good results: in fact, with relatively low steam pressures the maximum pressure obtained at exit was 3 MPa (up to 40% more than the steam at entry), but increasing the pressure of the steam one obtained a discharge pressure of the injector that was always less than that of the steam at entry.

Drawback in the simplified version presented in the above mentioned paper from JSME/ASME is the complexity of the two-stage injector which increases cost and risk of failure;the invention obviates part of said drawback as the system comprises a reliable injector more simple in construction and more cheap.

Also S. Suurmann (Ontario Hydro) had experimented (1986) a single stage injector for the injection of emergency water into the secondary phase of a Candu reactor. The injector was able to work injecting water into the steam generator at a maximum pressure of 4 MPa. However its performance was no longer ensured at entry water temperatures above 80°F (27°C).

From the above one may notice that, with injectors to obtain water pumping at "low" pressures (0.1 - 0.2 MPa) up to the high pressures featured by the "vessel" of boiling reactors, two or more injectors connected in series are required.

This leads to a certain complication of the emergency injection systems so far studied, and, as a consequence, to the reduction of the "passivity" and reliability features of the same systems.

Document US -A-4 569 635 also discloses a low pressure steam injector wherein the operation pressure is about 1 Mpa and the outlet maximum pressure is 3 Mpa.

The invention obviates the disadvantages of the prior art and offers the advantages of a highly effective single stage injection system and of a system featuring passivity, hence the overall system affords a minimum possibility of malfunctioning and, though relatively unimportant within a costly nuclear plant, maximum economy in costs and management.

A reduction of the complication of these plants may be achieved, as a principle, by using a single injector but, as described, so far no single stage injectors have been realized that are able to supply water at the reference pressures of boiling reactors using entry water at low pressures.

The high pressure steam injection system according to the invention comprises a first chamber, a lead duct for introducing a flow of liquid into the first chamber at a pressure barely above atmospheric pressure, a supersonic nozzle with a converging-diverging shape for introducing a jet of steam under pressure into an entry aperture of a second chamber, into which said jet of steam drags said flow of liquid, said second chamber being formed by a first converging conical part in the direction followed by the mixture of liquid and steam and by a second diverging conical part acting as a diffusor for the liquid exiting the injector, said first conical part having a first aperture communicating with a first discharge duct bearing a first starting valve controlled by the pressure within the injector so as to open when in said second chamber the pressure rises to more than a given value more than the pressure downstream said first valve, in order to allow the discharge of said mixture, and that closes automatically when the pressure drops below said given pressure value, the system being characterized by a second aperture in said first conical part downstream said first aperture, said second aperture communicating with a second discharge duct bearing a second valve which is controlled to increase its aperture with the decreasing of the steam pressure and vice versa so as to obtain maximum performance of the injector, which means to obtain maximum outlet liquid flowrate consistent with the desired outlet pressure .

Although notorious, we intend making clear that with "supersonic nozzle" we intend a nozzle in which steam at high pressure (9 MPa) and low speed (25 m/s) enters and exits at low pressure (e.g. 0.1 MPa) and high speed (e.g. Mach 2.5).

The injector operates as follows: at the time when an emergency takes place in which the injector is suited to act, because the valves controlling both said first and second discharge ducts are open and because initially the system contains only liquid, the latter exits mainly through said first aperture; instead, once the system is primed through the arrival of steam, the rate of flow through the first aperture drops drastically owing to the drop in pressure and the related valve may be closed. The second valve is adjusted, as a function of the entry pressure of the steam, so as to optimize the discharge rate and pressure at exit. Hence, the second valve may be partly opened or completely closed according to operative conditions.

The invention will be illustrated in detail below with a preferred embodiment and the attached drawings in which
Fig. 1 is a schematic drawing of the injector used in an injection system according to the invention,
Fig. 2 is a schematic drawing of a first system using the injector, and
Fig. 3 is the schematic drawing of a second system that uses the injector.

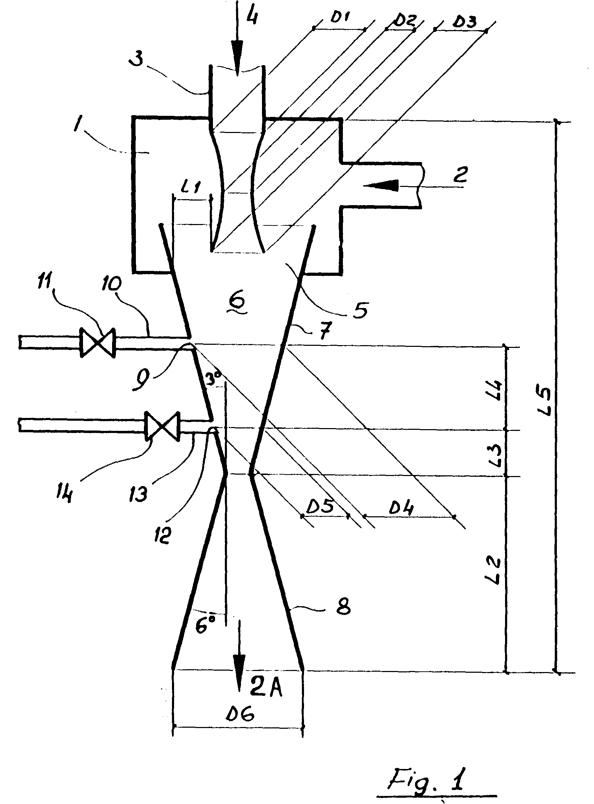

Fig. 1 shows an injector as described above in which 1 is the first chamber; 2 is the flow of liquid; 3 is the super-sonic nozzle; 4 is the jet of steam ; 5 is the entry aperture of a second chamber 6 in which the first converging conical part is 7 and the second diverging conical part is 8; the first aperture in said first conical part is 9, and communicates with the duct 10 bearing the starting valve it ; the second aperture 12 in said first conical part communicates with duct 13 bearing valve 14.

The dimensions in mm of the main parts are:
- D1 73
- D2 22
- D3 60
- D4 44
- D5 21
- D6 97
- L1 5.7
- L2 387
- L3 27
- L4 250
- L5 1300

Fig. 2 schematically shows a system to inject high pressure water into the vessel of a boiling water reactor in which an injection system corresponding to the invention is used. The injector 20 uses water that arrives, through liquid lead duct 21 to the injector, controlled by a check valve 22, from a tank 23 the bottom of which is about 10 m above the entry of duct 21 in injector 20 and uses steam arriving from the main steam exit duct 24 from reactor 25 and by branch 26 controlled by valve 27; considering that the injector is already full of liquid, valve 27 that controls the lead of steam to the injector may be opened to start the injector. Notice that, at start up, the pressure in the second chamber of the injector (6 in Fig. 1), which may also be defined as the mixing chamber, rises and hence discharge valves 11 and 14 are open. Moreover, the two discharges are connected to a tank 28 that contains water and is placed at the same height as tank 23 so as to balance, in normal system running conditions (that is with no emergency) the pressures within the injector, thus avoiding the continuous exit of liquid from the injector.

While the first discharge valve 11 automatically re-closes after the system has been started, owing to the drop in pressure within the mixing chamber 6, the second discharge valve 14 modulates its aperture on the basis of the entry steam pressure. The dotted line 30 shows the hydraulic connection between valve 14 and duct 26 downstream from valve 27. This ensures optimum performances in terms of exit rates and pressures, in the various operating conditions. The system is fitted with two check valves, the first already shown as 22 in lead duct 21 of liquid to the injector, and a second one 29 to be found in duct 31 for discharge of the liquid from the same injector. These bear safety functions to avoid loss of liquid and steam in case of unbalance in pressures.

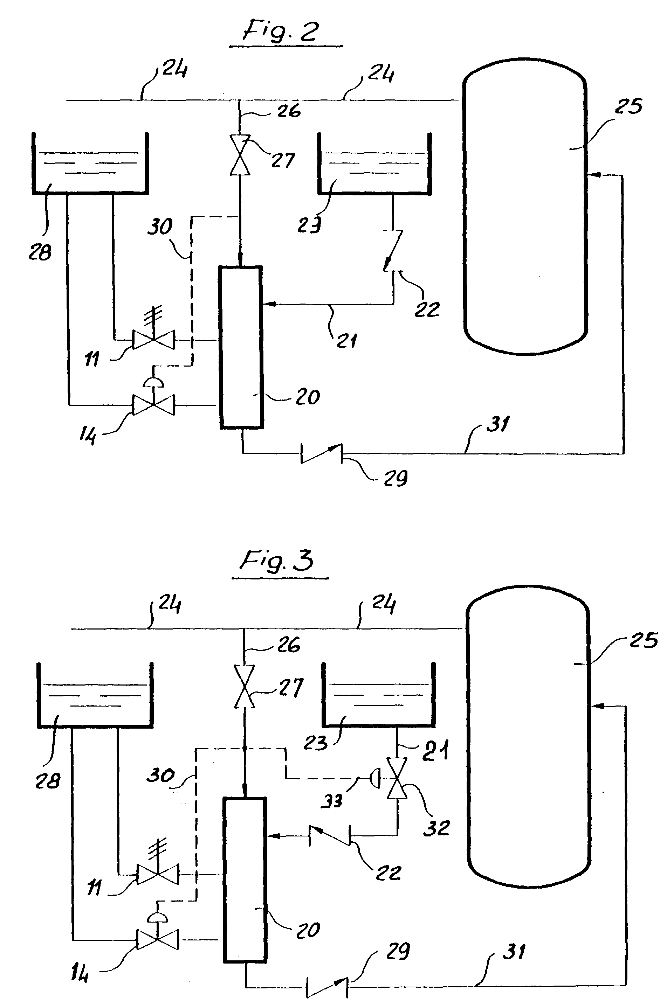

Fig. 3 schematically shows, with the same reference numbering as in Fig. 2 for equal parts, how performance at different pressures may be obtained by modulating the quantity of water entering the injector by means of the appropriate valve (32) controlled by steam; this allows reduction of the quantity of water used remaining equal the amount of water discharged by the injector. The dotted line 33 shows the hydraulic connection between duct 26 and valve 32.

Experiments on injector models have contributed to determining, and may contribute for each type of injector one should wish to design, the best combined use of the two said apertures in said first conical part, the best adjustment of the second aperture, and, the reciprocal positions of the two apertures and their sizes. For instance, experiments have shown that the most suitable length of L3 (Fig. 1), distance between the centre of the second aperture 12 and the narrow section, passage between parts 7 and 8, is the result of a compromise between the need to reduce pressure drops in the converging tract 7 and the need to shift the pressure recovery as far downstream as possible. In fact, the need to reduce said pressure drops by eliminating part of the liquid contained would lead to higher values of L3, while said pressure recovery, so much greater the narrower said passage section is, would lead to low values of L3.

Other advantages of the invention lie in the fact that it allows to pump liquid initially at low pressures until reaching a pressure considerably higher than that of steam at the reference conditions of a boiling water reactor or of the secondary stage of a pressurized water reactor. Moreover, at the same time the injector in this system ensures the performance of common injectors that work at relatively low steam pressures.

A further advantage of the invention lies in the fact that a system comprising said injector may also operate in a primary circuit of a pressurized water reactor.

## Claims

1. A steam injection system for high pressures, in particular upto about 9 MPa, comprising a first chamber (1), a lead duct (2,21) for introducing a flow of liquid into the first chamber at a pressure barely above atmospheric pressure, a super-sonic nozzle (3) with a converging-diverging shape for introducing a jet of steam (4) under pressure into an entry aperture (5) of a second chamber (6) into which the steam carries said flow of liquid, said second chamber (6) being formed by a first converging conical part (7) in the direction followed by the mixture of liquid and steam and by a second divergent conical part (8) that functions as a diffusor, said first conical part (7) having a first aperture (9) that communicates with a first discharge duct (10) bearing a first starting valve (11) that is controlled by the pressure within the injector so as to open when the pressure in said second chamber (6) rises above a given value of pressure downstream said first valve so as to allow the discharge of part of said mixture and that closes automatically when the pressure in said second chamber drops below said given value of pressure, the system being
**characterized** in that a second aperture (12) is made in said first conical part (7) downstream said first aperture (9), said second aperture communicating with a second discharge duct (13) bearing a second valve (14) which is controlled to increase its aperture with the decreasing of the steam pressure and vice versa in order to allow the maximum liquid outlet flowrate consistent with the desired outlet pressure.

2. A steam injection system according to claim 1 characterized in that a liquid feeding source (23) is in communication with the steam injector (20) through said lead duct of the liquid (2,21) and a valve (32) so controlled as to cause an increasing degree of aperture with the increasing of the steam pressure and a drop in the rate of liquid taken from said liquid source (23) having equal discharge rate from the injector compatible with the feed rates required, so that the injector may provide said maximum liquid outlet flowrate.

## Patentansprüche

1. Dampfstrahlpumpensystem für hohe Drücke, insbesondere bis zu etwa 9 MPa, mit einer ersten Kammer (1), einer Zuführleitung (2, 21) zum Einführen eines Flüssigkeitsstromes in die erste Kammer bei einem Druck knapp oberhalb Atmosphärendruck, einer Überschalldüse (3) mit konvergierenddivergierender Form zum Einführen eines Dampfstrahls (4) unter Druck in eine Eintrittsöffnung (5) einer zweiten Kammer (6), in welche der Dampf den Flüssigkeitsstrom mitreißt, wobei die zweite Kammer (6) gebildet ist durch einen ersten, konvergierenden konischen Teil (7) in der Richtung, in der sich die Flüssigkeits-Dampf-Mischung bewegt, und einen zweiten, divergierenden konischen Teil (8), der als Diffusor wirkt, wobei der erste konische Teil (7) eine erste Öffnung (9) hat, die mit einer ersten Auslaßleitung (10) zusammenwirkt, die ein erstes Startventil (11) enthält, welches von dem Druck in der Pumpe so gesteuert ist, daß es öffnet, wenn der Druck in der zweiten Kammer (6) über einen gegebenen Druckwert stromabwärts des ersten Ventils ansteigt, um den Auslaß eines Teils der Mischung zu ermöglichen, und automatisch schließt, wenn der Druck in der zweiten Kammer unter den vorgegebenen Druckwert abfällt,
dadurch **gekennzeichnet**, daß eine zweite Öffnung (12) in dem ersten konischen Teil (7) stromabwärts der ersten Öffnung (9) vorgesehen ist, wobei die zweite Öffnung mit einer zweiten Auslaßleitung (13) kommuniziert, die ein zweites Ventil (14) enthält, welches so gesteuert ist, daß es seinen Öffnungsquerschnitt vergrößert bei Abnahme des Dampfdrucks und umgekehrt, um den maximalen Auslaßdurchsatz der Flüssigkeit, der mit dem gewünschten Auslaßdruck verträglich ist, zuzulassen.

2. Dampfstrahlpumpensystem nach Anspruch 1,
dadurch **gekennzeichnet**, daß eine Flüssigkeitsquelle (23) in Verbindung mit der Dampfstrahlpumpe (20) steht über die Flüssigkeitszuführleitung (2, 21) und über ein Ventil (32), das so gesteuert ist, daß es eine Vergrößerung des Öffnungsquerschnitts bei Zunahme des Dampfdrucks bewirkt und eine Abnahme des Entnahmedurchsatzes von Flüssigkeit aus der Flüssigkeitsquelle (23) auf den gleichen Entnahmedurchsatz aus der Dampfstrahlpumpe, der mit den erforderlichen Zuführmengen kompatibel ist, bewirkt, so daß die Pumpe den maximalen Flüssigkeitsauslaßdurchsatz liefern kann.

## Revendications

1. Système d'injection de vapeur pour hautes pressions, en particulier jusqu'à environ 9 MPa, comprenant une première chambre (1), une conduite d'amenée (2, 21) pour introduire un courant de liquide dans la première chambre à une pression à peine au-dessus de la pression atmosphérique, une buse supersonique (3) présentant une forme convergentedivergente pour introduire un jet de vapeur (4) sous pression dans une ouverture d'entrée (5) d'une seconde chambre (6) dans laquelle la vapeur entraîne le courant de liquide, la seconde chambre (6) étant formée par une première partie conique convergente (7) dans la direction suivie par le mélange de liquide et de vapeur, et par une seconde partie conique divergente (8) qui fonctionnement en diffuseur, la première partie conique (7) comportant une première ouverture (9) qui communique avec une première conduite de décharge (10) portant une première vanne de démarrage (11) commandée par la pression à l'intérieur de l'injecteur de manière à s'ouvrir lorsque la pression dans la seconde chambre (6) monte au-dessus d'une valeur de pression donnée en aval de la première vanne, pour permettre ainsi la décharge d'une partie du mélange, et à se fermer automatiquement lorsque la pression dans la seconde chambre tombe au-dessous de la valeur de pression donnée,
caractérisé en ce qu'
une seconde ouverture (12) est ménagée dans la première partie conique (7) en aval de la première ouverture (9), cette seconde ouverture communiquant avec une seconde conduite de décharge (13) portant une seconde vanne (14) commandée pour augmenter son ouverture lorsque la pression du courant diminue et vice versa, de manière à permettre le débit de sortie de liquide maximum compatible avec la pression de sortie voulue.

2. Système d'injection de vapeur selon la revendication 1,
caractérisé en ce qu'
une source d'alimentation de liquide (23) est en communication avec l'injecteur de vapeur (20) par la conduite d'amenée de liquide (2, 21) et par une vanne (32) commandée de manière à produire une augmentation du degré d'ouverture lorsque la pression de vapeur augmente et lorsqu'une chute du débit de liquide prélevé à la source de liquide (23) a un débit de décharge égal, provenant de l'injecteur, compatible avec les débits d'alimentation requis, de sorte que l'injecteur peut fournir le débit de sortie de liquide maximum.
